# EUROPÄISCHE PATENTSCHRIFT

(11) **EP 3 301 407 B1**
(45) Veröffentlichungstag und Bekanntmachung des Hinweises auf die Patenterteilung: **11.03.2020**
(21) Anmeldenummer: 17001099.5
(22) Anmeldetag: 28.06.2017
(51) Int. Cl.: G01F 1/20, A01D 41/127, G01F 1/30, G01F 3/24, A01D 75/28

(54) **VERFAHREN ZUR BESTIMMUNG EINES AUS SCHÜTTGUT BESTEHENDEN MASSENSTROMS SOWIE STEUER- UND REGELUNGSVORRICHTUNG ZUR DURCHFÜHRUNG DES VERFAHRENS**
METHOD FOR DETERMINING A BULK GOOD MASS FLOW AND CONTROL UNIT TO CARRY OUT THE METHOD
PROCÉDÉ DE DÉTERMINATION D'UN DÉBIT MASSIQUE COMPRENANT UN PRODUIT EN VRAC ET UNITÉ DE CONTRÔLE POUR EFFECTUER LE PROCÉDÉ

(30) Priorität: 29.09.2016 DE 102016118559
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Brune, Markus, 33428 Harsewinkel (DE); Neu, Sebastian, 49196 Bad Laer (DE); Kübbeler, Martin, 33775 Versmold (DE); Quincke, Gunnar, 59494 Soest (DE); Brandmeier, Jonas, 33428 Harsewinkel (DE)
(74) Vertreter: CLAAS Gruppe

(56) Entgegenhaltungen:
- EP-A1- 0 853 234
- GB-A- 2 321 112
- US-A- 5 343 761

## Beschreibung

Die vorliegende Erfindung betrifft ein Verfahren zur Bestimmung eines aus Schüttgut bestehenden Massenstroms gemäß dem Oberbegriff des Anspruches 1 sowie eine Steuer- und Regelungsvorrichtung für eine selbstfahrende Erntemaschine gemäß dem Anspruch 8.

Zur Bestimmung eines aus Schüttgut, insbesondere Körnerfrüchten, bestehenden Massenstroms, welcher mittels einer endlos umlaufenden, flächige Förderelemente aufweisenden, Fördervorrichtung von einem tiefer gelegenen Schüttgutannahmebereich zu einem höher gelegenen Schüttgutabgabebereich gefördert wird, In welchem das von der Fördervorrichtung abgegebene Schüttgut durch eine im Schüttgutabgabebereich angeordnete Führungsfläche In Richtung auf eine Messeinrichtung umgelenkt wird, Ist es bekannt, den Massenstrom durch die Messung einer auf eine Sensorfläche der Messeinrichtung ausgeübten Kraft zu bestimmen.

Ein Verfahren der eingangs genannten Art ist aus der EP 1 169 905 A1 bekannt. Die EP 1 169 905 A1 beschreibt eine Fördervorrichtung mit einer endlos umlaufenden Förderkette, an der Förderpaddel angeordnet sind. Die Förderpaddel schleudern das darauf befindliche Sohüttgut im Umlenkpunkt in Richtung eines die Fördervorrichtung im Sohüttgutabgabebareich umgebenden Gehäuses. Das Schüttgut strömt entlang der Innenfläche des Gehäuses und wird auf eine Sensorfläche einer Messeinrichtung gelenkt. Die Messeinrichtung ist zur Erfassung der durch den Massenstrom auf die Sensorfläche aufgebrachten Zentrifugalkräfte eingerichtet. Durch die Messung der Zentrifugalkraft lässt sich auf den Massenstrom rückschließen, Das aus der EP 1 169 905 A1 bekannte Verfahren berücksichtigt bei der Bestimmung des Massenstroms die Partikelgröße des Schüttgutes. Bei der Abgabe des Schüttgutes von den Förderpaddeln durch das Werfen in Richtung der Sensorfläche stellen sich unterschiedliche Geschwindigkeiten ein, die von der Partikelgröße abhängig sind.

Aus der EP 0 853 234 ist zudem eine gattungsgemäße Messeinrichtung bekannt geworden, die so strukturiert ist, dass sich ein nahezu konstanter Reibkoeffizient zwischen dem bewegten Gutstrom und der Messfläche der Messeinrichtung einstellt. Eine derartige Ausführung hat jedoch den Nachteil, dass eine Reibkoeffizient-abhängige Reibkraftkomponente einen messwertverfälschenden Einfluss auf die von der Messeinrichtung indirekt ermittelte Erntegutmasse hat.

Aufgabe der vorliegenden Erfindung ist es, ein Verfahren sowie eine Steuer- und Regelungsvorrichtung zur Durchführung eines Verfahrens zur Bestimmung eines Massenstroms bereitzustellen, die sich durch eine Verbesserung der Genauigkeit der Durchsatzbestimmung auszeichnen.

Diese Aufgabe wird erfindungsgemäß durch ein Verfahren gemäß den Merkmalen des Anspruches 1 sowie eine Steuer- und Regelungsvorrichtung gemäß den Merkmalen des Anspruches 8 gelöst.

Vorteilhafte Weiterbildungen sind Gegenstand der von diesen unabhängigen Ansprüchen abhängigen Unteransprüche.

Gemäß dem Anspruch 1 wird ein Verfahren zur Bestimmung eines aus Schüttgut bestehenden Massenstroms, insbesondere Körnerfrüchten, vorgeschlagen. Mittels einer endlos umlaufenden, flächige Förderelemente aufweisenden, Fördervorrichtung wird Schüttgut von einem tiefer gelegenen Schüttgutannahmebereich zu einem höher gelegenen Schüttgutabgabebereich gefördert, in welchem das von der Fördervorrichtung abgegebene Schüttgut durch eine im Schüttgutabgabebereich angeordnete Führungsfläche in Richtung auf eine Messeinrichtung umgelenkt wird. Der Massenstrom wird durch die Messung einer auf eine Sensorfläche der Messeinrichtung ausgeübten resultierenden Zentrifugalkraft bestimmt. Zur Verbesserung der Genauigkeit der Durchsatzbestimmung werden zumindest zwei die Kraftmessung beeinflussende, insbesondere von Schüttguteigenschaften unabhängige, Parameter kompensiert. Ein erster Parameter, der bei der Bestimmung des von der Fördervorrichtung geförderten Massenstroms respektive Durchsatzes kompensiert wird, sind die Reibungskräfte, die das Schüttgut beim entlangströmen auf die Sensorfläche aufprägt. Neben diesem ersten die Kraftmessung beeinflussenden Parameter ist zumindest ein zweiter Parameter vorgesehen, der Berücksichtigung findet, der das Messergebnis der Kraftmessung beeinflussen kann. Dabei handelt es sich um einen Parameter, welcher äußere Einflüsse repräsentiert, die die Messung respektive die von dem die Sensorfläche überströmenden Schüttgut auf die Sensorfläche aufgebrachten Kräfte dauerhaft oder nur temporär beeinflussen.

Erfindungsgemäß werden vom Schüttgut auf die Sensorfläche übertragene Reibungskräfte durch eine geeignete Anordnung der Messeinrichtung, in welcher eine resultierende Reibungskraft senkrecht zur Messrichtung wirkt, kompensiert. Dabei wird die Sensorfläche durch den parabelförmigen Wurfverlauf des geförderten Gutstromes tangiert und die resultierende Reibungskraft geht damit axial in die Messung der Messrichtung ein, so dass diese nicht gemessen werden. Hierzu kann die Messrichtung eine als Plattformwägezelle ausgeführte Kraftmesszelle aufweisen.

Weiterhin wird erfindungsgemäß eine Neigung der Messeinrichtung detektiert und kompensiert. Während der Erntefahrt der Erntemaschine kann aufgrund der Bodenbeschaffenheit eine Quer- und/oder Längsneigung auftreten. Diese Neigung beeinflusst die von der Messeinrichtung gemessene resultierende Zentrifugalkraft. Die Messung der auf die Sensorfläche einwirkenden resultierenden Zentrifugalkraft erfolgt nur dann im vollen Betrag, wenn sie exakt in Messrichtung der Messeinrichtung, das heißt der Kraftmesszelle, wirkt. Ändert sich die Neigung der Messeinrichtung respektive die der Erntemaschine, so wirkt die Gravitationskraft unter einem geänderten Winkel auf die Sensorfläche und auf den Massenstrom ein. Die Änderung der resultierenden Zentrifugalkraft und der von der Kraftmesszelle gemessenen Kraft unter dem Einfluss der detektierten Neigung der Erntemaschine wird entsprechend verrechnet und dadurch bei der Bestimmung des Durchsatzes bzw. des Ertrages kompensiert.

Des Weiteren können auf die Fördervorrichtung in im Wesentlichen vertikaler Richtung einwirkende äußere mechanische Kräfte kompensiert werden. Hierrunter sind Beschleunigungskräfte zu verstehen, welche von der Erntemaschine beim Überfahren eines Feldes sowie von Antrieben der Erntemaschine, in Form von Schwingungen, auf die Messeinrichtung übertragen werden. Diese Beschleunigungskräfte wirken auf die Messeinrichtung in der Weise ein, dass es zu Abweichungen der von der Kraftmesszelle im Zeitpunkt des Auftretens der Beschleunigung gemessenen Kräfte kommt. So kann das Durchfahren einer Senke im Boden zu einer schlagartigen Beschleunigung in im Wesentlichen vertikaler Richtung führen, welche die Messung der von dem vorbeiströmenden Erntegut auf die Sensorfläche ausgeübten Zentrifugalkraft beeinflusst. Des Weiteren beeinflussen weitere Aspekte der Fahrdynamik, wie eine positive bzw. negative Beschleunigung der Erntemaschine, die Messeinrichtung. Gleiches gilt für durch die Antriebe der Erntemaschine verursachte Schwingungen und Vibrationen, die durch die Karosserie oder Antriebselemente übertragen werden. Diese durch die Beschleunigung verursachten zusätzlichen Kräfte können ebenfalls kompensiert werden.

Darüber hinaus kann ein Drehzahlabfall der Fördervorrichtung kompensiert werden. Ursächlich für einen Drehzahlabfall der Fördervorrichtung ist das Auftreten einer temporären Drückung des Antriebs der Erntemaschine. Um das Auftreten einer Drückung festzustellen, wird eine Drehzahlüberwachung durchgeführt. Dabei kann neben der Antriebsdrehzahl des Antriebes der Erntemaschine auch die Drehzahl der Fördervorrichtung sensorisch überwacht werden. Der temporäre Drehzahlabfall des Antriebs hat einen Drehzahlabfall respektive eine Reduzierung der Fördergeschwindigkeit der endlos umlaufenden Fördervorrichtung zur Folge. Der damit einhergehende Geschwindigkeitsabfall des entlang der Sensorfläche strömenden Schüttgutstromes, der eine Reduzierung der von dem Schüttgutstrom auf die Sensorfläche ausgeübten resultierenden Zentrifugalkraft bedeutet, wird entsprechend verrechnet. Auf diese Weise wird die von dem Schüttgutstrom auf die Sensorfläche aufgebrachte resultierende Zentrifugalkraft unter Berücksichtigung des Geschwindigkeitsabfalls bei der Kraftmessung durch die Messeinrichtung zur Bestimmung des Durchsatzes bestimmt.

Vorteilhaft ist es, dass zu einer Kalibrierung der Messeinrichtung das Schüttgut mehrfach gegengewogen und aus dem Ergebnis ein Korrekturfaktor bestimmt wird. Die Kalibrierung der Messeinrichtung kann einmalig ausgeführt werden und behält für die gesamte Einsatzdauer der Erntemaschine ihre Gültigkeit. Bevorzugt wird die Kalibrierung jedoch einmal zu Beginn einer jeweiligen Erntesaison durchgeführt.

Vorzugsweise kann die Feuchte des Schüttgutes bestimmt werden. Die Feuchte des Schüttgutes ist ein weiterer Parameter, der die Bestimmung des Massenstroms aufgrund der Kräftemessung durch die Messeinrichtung beeinflusst. Mit zunehmendem Feuchtigkeitsgehalt kann das Gesamtgewicht der einzelnen Schüttgutpartikel ansteigen. Eine zunehmende Feuchtigkeit des Erntegutes kann die Strömungsgeschwindigkeit beeinflussen, mit welcher das Erntegut entlang der Sensorfläche strömt. Zudem kann die Feuchtigkeit die Haftreibung zwischen dem Schüttgut und der Sensorfläche einerseits und zwischen einzelnen Partikeln des Schüttgutes andererseits beeinflussen. Hierdurch kann die von dem vorbeiströmenden Schüttgut auf die Sensorfläche bei gleichbleibendem Durchsatz ausgeübte Zentrifugalkraft variieren. Um diesen Einfluss zu kompensieren, kann die Detektionscharakteristik der Messeinrichtung in Abhängigkeit von der Feuchtigkeit des Schüttgutes geändert werden, um diesen Einfluss zu kompensieren.

Weiterhin sollte zusätzlich die Art des Schüttgutes berücksichtigt werden. Die Art und Beschaffenheit des Schüttgutes beeinflussen die Messung grundsätzlich. Die Größe und das Gewicht der einzelnen Partikel des Schüttgutes bestimmen das Abwurfverhalten beim Verlassen der Förderelemente der Fördervorrichtung in deren Umlenkpunkt im Schüttgutabgabebereich.

Insbesondere kann die Messcharakteristik der Messeinrichtung in Abhängigkeit von der Materialart und dessen physikalischen Eigenschaften angepasst werden. Dabei wird die Bestimmung des Massenstroms dichteunabhängig durchgeführt.

Gemäß dem Anspruch 8 wird eine Steuer- und Regelungsvorrichtung zur Durchführung eines Verfahrens zur Bestimmung eines aus Schüttgut bestehenden Massenstroms nach einem der vorangehenden Ansprüche 1 bis 7 vorgeschlagen, welcher von einer selbstfahrenden Erntemaschine, insbesondere Mähdrescher, mittels einer endlos umlaufenden, flächige Förderelemente aufweisenden Fördervorrichtung von einem tiefer gelegenen Schüttgutannahmebereich zu einem höher gelegenen Schüttgutabgabebereich gefördert wird, in welchem das von dem Fördervorrichtung abgegebene Schüttgut durch eine im Schüttgutabgabebereich angeordnete Führungsfläche in Richtung auf eine Messeinrichtung umlenkbar ist, wobei der Massenstrom durch die Messung einer auf eine Sensorfläche der Messeinrichtung ausgeübten Kraft bestimmt wird, wobei die Steuer- und Regelungsvorrichtung dazu eingerichtet ist, zumindest zwei, insbesondere von Schüttguteigenschaften unabhängige, Parameter, welche die durch die Messeinrichtung durchgeführte Kraftmessung beeinflussen, zu kompensieren.

Hierzu kann die Steuer- und Regelungsvorrichtung mit zumindest einem Sensor signaltechnisch verbunden sein, der der Erfassung zumindest eines die Kraftmessung beeinflussenden Parameters dient.

So kann der zumindest eine Sensor als ein Beschleunigungssensor ausgebildet sein.

Weiterhin kann der zumindest eine Sensor als ein Neigungssensor ausgebildet sein.

Des Weiteren kann der zumindest eine Sensor als ein Drehzahlsensor ausgebildet sein.

Insbesondere kann die Steuer- und Regelungsvorrichtung eine Speichereinheit umfassen, in der verschiedene Detektionscharakteristika der Messeinrichtung hinterlegt sind, die in Abhängigkeit von einem Erntegutparameter, insbesondere der Erntegutart und/oder der Erntegutfeuchte, auswählbar sind. Hierfür kann auf eine in der Steuer- und Regelungsvorrichtung hinterlegbare, editierbare Fruchtarttabelle zurückgegriffen werden. Diese Detektionscharakteristika können auch als Kennfeldlinien in der Steuer- und Regelungsvorrichtung hinterlegt sein.

Die vorliegende Erfindung wird nachstehend anhand von in den Zeichnungen dargestellten Ausführungsbeispielen näher erläutert.

Es zeigen:
- Fig. 1: eine schematische Seitenansicht eines Mähdreschers;
- Fig. 2: eine Teilansicht einer als Kettenförderer ausgeführten Fördervorrichtung für den Mähdrescher;
- Fig. 3: eine vereinfachte Teilansicht der Fördervorrichtung gemäß Fig. 2;
- Fig. 4: eine Teilansicht einer alternativen Anordnung einer Messeinrichtung im Kopfbereich der Fördervorrichtung.

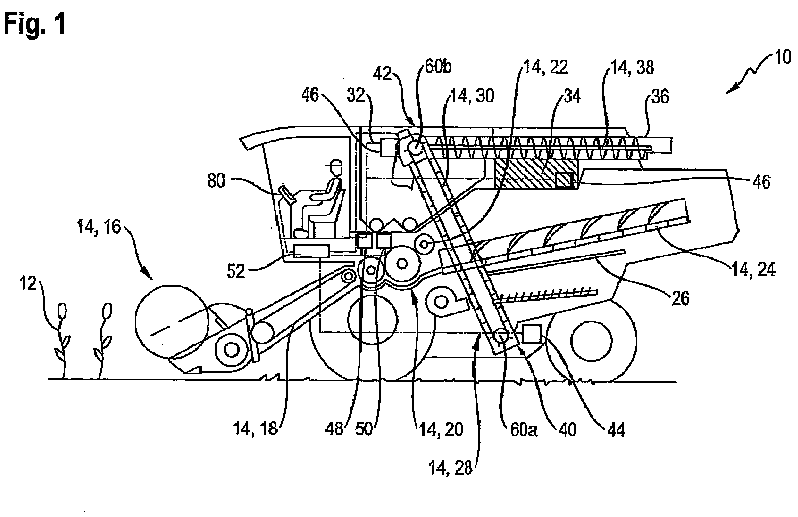

In Fig. 1 ist eine landwirtschaftliche Erntemaschine im Sinne der vorliegenden Erfindung dargestellt, bei der es sich um einen selbstfahrenden Mähdrescher 10 handelt. Der Mähdrescher 10 weist zur Aufnahme und Bearbeitung von Erntegut 12 eine Vielzahl von Arbeitsaggregaten 14 auf. Zu den Arbeitsaggregaten 14 zählen bei dem hier dargestellten Mähdrescher 10 ein Schneidwerk 16 zur Aufnahme des Erntegutes 12 und ein mit diesem verbundener Schrägförderer 18 zum Weitertransport des Erntegutes 12 in den Mähdrescher. Von dem Schrägförderer 18 wird das Erntegut 12 als Erntegutstrom an eine als weiteres Arbeitsaggregat 14 ausgebildete Drescheinrichtung 20 des Mähdreschers 10 übergeben. Durch eine Umlenktrommel 22 gelangt der Erntegutstrom in eine als Trennrotor ausgebildete Trenneinrichtung 24 zum Abscheiden von freibeweglichen Körnern des Erntegutstromes in einen unteren Bereich des Mähdreschers. Von hier aus gelangt der Erntegutstrom über einen Rücklaufboden 26 zu einer Reinigungsvorrichtung 28, welche Siebböden und ein Gebläse zur Reinigung des Erntegutes umfasst. Die freibeweglichen Körner aus dem Erntegutstrom werden von einer als Kettenförderer ausgebildeten Fördervorrichtung 30 zu einem Korntank 32 transportiert. Hierzu nimmt die Fördervorrichtung 30 das gereinigte Erntegut in einem tiefer gelegenen Schüttgutannahmebereich 40 im Fußbereich der Fördervorrichtung 30 an und fördert es zu einem höher gelegenen Schüttgutabgabebereich 42 im Kopfbereich der Fördervorrichtung 30. Der Mähdrescher 10 weist zudem einen Antriebsmotor 34 auf, der die zum Betrieb der Arbeitsaggregate 14 und zur Fortbewegung des Mähdreschers 10, beispielsweise mittels eines hydrostatischen Fahrantriebes (nicht dargestellt), benötigte Antriebsleistung bereitstellt. Die Arbeitsaggregate 14 und der Fahrantrieb des Mähdreschers 10 sind hierfür zur Energieübertragung mit der Antriebsmaschine 34 verbunden.

Weiterhin umfasst der Mähdrescher 10 eine Steuer- und Regelvorrichtung 52, welche mit einer Ein- und Ausgabeeinrichtung 80 im Inneren einer Kabine des Mähdreschers 10 signaltechnisch verbunden ist. Darüber hinaus ist die Steuer-und Regelvorrichtung 52 mit mehreren an dem Mähdrescher 10 verbauten Sensoren verbunden, die der Bestimmung von Betriebs- und Erntegutparametern dienen. Bei den an bzw. in dem Mähdrescher 10 verbauten Sensoren handelt es sich unter anderem um einen Feuchtesensor 44 zur Bestimmung des Feuchtegehalts des, insbesondere gereinigten, Erntegutes, zumindest einen Drehzahlsensor 46 zur Überwachung der Antriebsdrehzahl der Antriebsmaschine 34, einen Neigungssensor 50 sowie zumindest einen Beschleunigungssensor 48, welcher auf den Mähdrescher 10 einwirkende Beschleunigungen bestimmt, die durch die Fahrt auf dem Feld verursacht bzw. durch die Antriebsmaschine 34 und sonstige die Antriebskräfte übertragenden Komponenten des Mähdrescher 10 entstehen. Die Anordnung weiterer Sensoren, die Betriebs- oder Erntegutparameter erfassen, welche insbesondere eine Durchsatzmessung des gereinigten Erntegutes in der Fördervorrichtung 30 beeinflussen können, ist denkbar.

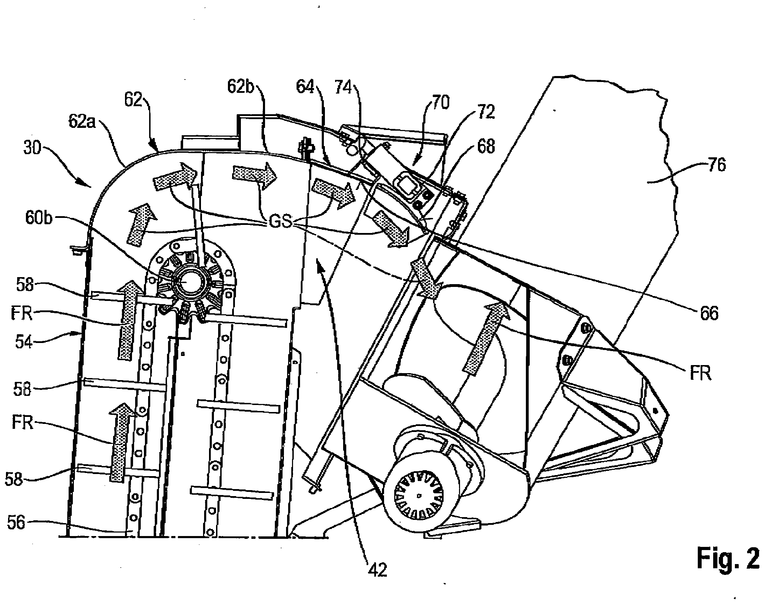

In Fig. 2 ist eine Teilansicht der als Kettenförderer ausgeführten Fördervorrichtung 30 für den Mähdrescher 10 dargestellt. Die Fördervorrichtung 30 umfasst ein Gehäuse 54, welches eine endlos umlaufende Förderkette 56, die um jeweils ein im Schüttgutannahmebereich 40 und im Schüttgutabgabebereich 42 angeordnetes unteres und oberes Ketten- bzw. Antriebsrad 60a, 60b angetrieben und umgelenkt wird, weitgehend umschließt. Im Schüttgutannahmebereich 40 sowie im Schüttgutabgabebereich 42 weist das Gehäuse 54 Öffnungen auf, durch welche das Erntegut zugeführt und abgeführt wird. An der endlos umlaufenden Förderkette 56 sind gleichmäßig zueinander beabstandet flächige Förderelemente 58 angeordnet. Die paddelförmigen Förderelemente 58 erstrecken sich im Wesentlichen senkrecht zur Förderkette 56. Die Förder- respektive Umlaufrichtung der Fördervorrichtung 30 ist durch Pfeile FR gekennzeichnet. So kann zumindest ein Sensor 46 der Fördervorrichtung 30 zugeordnet sein, welcher die Fördergeschwindigkeit der Fördervorrichtung 30 überwacht. Dieser Sensor kann als ein Drehzahlsensor 46 ausgeführt sein, der die Drehzahl eines der Kettenräder 60a, 60b überwacht. Alternativ kann ein optischer Sensor vorgesehen sein, der die zeitlichen Abstände der vorbeilaufenden Förderelemente 58 erfasst.

Im Schüttgutabgabebereich 42 ist das obere Kettenrad 60b von einem ein- oder mehrteilig ausgebildeten Deckelabschnitt 62 abschnittsweise umgeben. Der Deckelabschnitt 62 weist einen ersten Abschnitt 62a mit einem im Wesentlichen kreissektorförmigen Querschnitt auf, welcher das obere Kettenrad 60b in radialer Richtung abschnittsweise umgibt. Auf der dem Schüttgutabgabebereich 42 zugewandten Seite weist der Deckelabschnitt 62 einen zweiten Abschnitt 62b mit einem im Wesentlichen quaderförmigen Querschnitt auf. Der zweite Abschnitt 62b weist dabei einen geringeren Krümmungsradius als der erste Abschnitt 62a des Deckelabschnitts 62 auf.

An den Deckelabschnitt 62 schließt sich ein Führungsabschnitt 64 an. Der Führungsabschnitt 64 ist als separates Bauteil ausgeführt. Ein dem oberen Kettenrad 60b zugewandter Übergang 78 zwischen dem Deckelabschnitt 62 und dem Führungsabschnitt 64 weist in Umfangsrichtung einen tangentialen Verlauf auf. Die Anordnung des Führungsabschnittes 64 am Deckelabschnitt 62 erfolgt dabei im Wesentlichen absatzfrei, so dass sich ein tangentialer Übergang einstellt. Die sich vor dem Erreichen des oberen Kettenrades 60b im Wesentlichen in der Horizontalen befindenden Förderelemente 58 transportieren das Erntegut zunächst vom tiefer gelegenen Schüttgutannahmeabschnitt 40 zum höher gelegenen Schüttgutabgabeabschnitt 42. Durch das Umlenken der Förderelemente 58 um das obere Kettenrad 60b wird das auf dem flächigen Förderelement 58 liegende Erntegut in radialer Richtung des Deckelabschnitts 64 abgegeben. Seine dem Kettenrad 60b zugewandte Innenfläche des Deckelabschnittes 62 begrenzt dabei die Flugbahn des von den Förderelementen 58 in einer Wurfbewegung abgegebenen Erntegutes in radialer Richtung. Pfeile GS veranschaulichen den Strömungsverlauf des sich entlang des Deckelabschnitts 62, des Führungsabschnitts 64 sowie einer Sensorfläche 68 bewegenden Schüttgut- bzw. Erntegutstromes.

An dem Führungsabschnitt 64 ist eine Messeinrichtung 70 angeordnet. Hierzu ist an der Außenseite des Führungsabschnittes 64 eine Halterung 74 vorgesehen. An der Halterung 74 ist eine Kraftmesszelle 72 angebracht. An der Kraftmesszelle 72 ist die Sensorfläche 68 angeordnet, die einen entsprechend dem Strömungsverlauf GS gekrümmten Verlauf aufweist. Die Kraftmesszelle 72 und die Sensorfläche 68 sind Bestandteil der Messeinrichtung 70. Der Führungsabschnitt 64 weist eine Führungsfläche 66 auf, die dem oberen Kettenrad 60b zugewandt ist. Ein weiterer Übergang 78 zwischen der Führungsfläche 66 des Führungsabschnittes 64 und der Sensorfläche 68 der Messeinrichtung 70 weist ebenfalls einen tangentialen Verlauf auf. Die Sensorfläche 68 der Messeinrichtung 70 ist derart im Kopfbereich der Fördervorrichtung 30 angeordnet, dass sich im Übergang 78 von der Führungsfläche 66 auf die Sensorfläche 68 ein tangentialer Verlauf einstellt. Die Positionierung der Messeinrichtung 70 erfolgt dabei im Auslaufbereich der Fördervorrichtung 30, das heißt nachdem das Erntegut die paddelförmigen Förderelemente 58 vollständig verlassen hat. Die Sensorfläche 68 weist eine abrasionsbeständige, verschleißfeste Oberfläche auf, welche sich durch eine Oberflächenrauigkeit auszeichnet.
Das aus der Fördervorrichtung 30 im Schüttgutabgabebereich 42 austretende Erntegut wird an eine Förderschnecke 76 übergeben, welche das Erntegut in den Korntank 32 überführt.

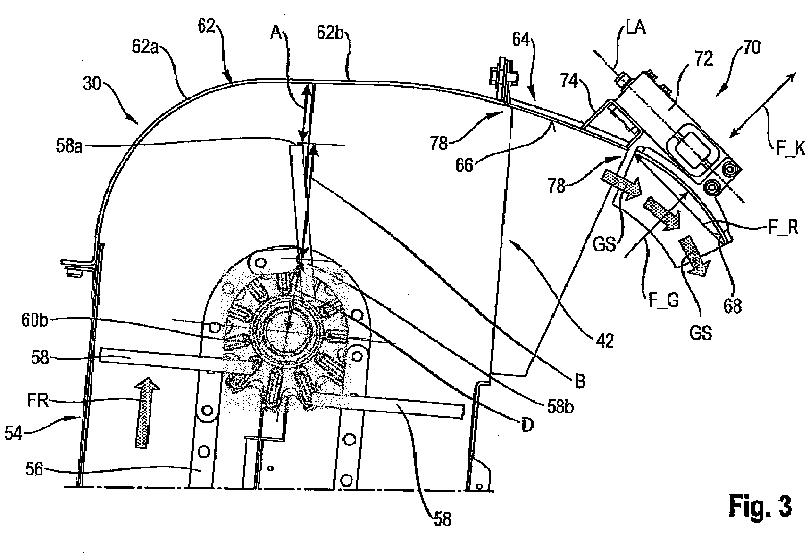

Die Darstellung in Fig. 3 zeigt den Kopfbereich der Fördervorrichtung 30 gemäß Fig. 2 in einer weiter vereinfachten Darstellung. Auf die Darstellung der unterhalb des oberen Kettenrades 60b liegenden Bauteile der Fördervorrichtung 30 wie auch der im Schüttgutabgabebereich 42 angeordneten Förderschnecke 76 wurde hierzu verzichtet. Die Darstellung zeigt ein Förderelement 58, dessen freies Ende 58a im Zenit des oberen Kettenrades 60b steht. In dieser als Zenit bezeichneten Position des Förderelementes 58 ist der Abstand zwischen dem freien Ende 58a und dem die Fördervorrichtung 30 im Schüttgutabgabebereich 42 abschnittsweise umgebenden Deckelabschnitt 62 am geringsten. Mit dem Erreichen dieser Position des jeweiligen Förderelementes 58 soll sichergestellt sein, dass das auf dem Förderelement 58 befindliche Erntegut nahezu vollständig abgegeben wurde. Hierzu ist der Abstand zwischen dem freien Ende58a des jeweiligen Förderelements 58 und dem die Fördervorrichtung 30 im Schüttgutabgabebereich 42 umgebenden Deckelabschnitt 62 in der Position des Förderelementes 58, in welcher die Beabstandung zu dem Deckelabschnitt 62 am geringsten ist, derart gewählt, dass das auf dem Förderelement 58 befindliche Schüttgut nahezu vollständig abgebbar und eine gleichmäßige Anströmung der Sensorfläche 68 erreichbar ist. Dazu weisen der Deckelabschnitt 62 und das im Zenit stehende freie Ende 58a des jeweiligen Förderelementes 58 einen Mindestabstand A auf. Der Mindestabstand A ist gleich oder größer als ein Abstand B zwischen dem freien Ende 58a des Förderelementes 58 und seinem Anlenkpunkt 58b an der endlos umlaufenden Förderkette 56 der Fördervorrichtung 30. Der Abstand B entspricht dabei dem halben Abstand des freien Endes 58a des Förderelementes 58 zum Teilkreisdurchmesser D des oberen Kettenrades 60b. Um den Mindestabstand A konstant halten zu können, ist vorgesehen, dass eine Spannvorrichtung zum Straffen der Förderkette im Fußbereich der Fördervorrichtung 30 angeordnet ist.
Weiterhin ist der Darstellung in Fig. 3 die Anordnung der Messeinrichtung 70 zu entnehmen. Die Messeinrichtung 70 ist durch ein die Kraftmesszelle 72 einschließendes Gehäuse an der Halterung 74 an dem Führungsabschnitt 64 angeordnet. Die Sensorfläche 68 ist nur durch die Kraftmesszelle 72 mit der Fördervorrichtung 30 verbunden. Auf diese Weise können Störeinflüsse durch Hysterese einer eventuellen Lagerung ausgeschlossen werden. Die Übergänge 78 zwischen dem zweiten Abschnitt 62b des Deckelabschnitts 62 und dem Führungsabschnitt 64 sowie dem Führungsabschnitt 64 zur Sensorfläche 68 der Messeinrichtung 70 weisen, wie bereits ausgeführt, einen tangentialen Verlauf auf. Der jeweilige tangentiale Verlauf der Übergange 78 gewährleistet ein tangentiales Einlaufen des Erntegutstromes auf die Sensorfläche 68.

Die Kraftmesszelle 72 ist als eine Plattformwägezelle ausgeführt. Dieser Typ einer Kraftmesszelle 72 misst die auf die Sensorfläche 68 einwirkenden Kräfte unabhängig von einem Hebelarm, der aus dem Abstand zwischen der Anbringung an der Halterung 74 und der Anordnung der Sensorfläche an der Kraftmesszelle 72 resultiert. Das entlang der Sensorfläche 68 strömende Erntegut erzeugt aufgrund seiner Umlenkung eine durch Neigung und Gravitation beeinflusste resultierende Zentrifugalkraft, welche durch einen Kraftvektor F_G veranschaulicht ist. Die Kraftmesszelle 72 ist derart angeordnet, dass die Messrichtung der Messeinrichtung 70 und die auf die Sensorfläche 68 einwirkende resultierende Zentrifugalkraft F_G gleichgerichtet sind. Die Kraftmesszelle 72 nimmt eine durch einen resultierende Kraftvektor F_K veranschaulichte gemessene Kraft auf. Die Orientierung des Kraftvektors F_K stellt zugleich die Messrichtung der Kraftmesszelle 72 dar. Aus der an der Oberfläche der Sensorfläche 68 auftretenden Reibung des vorbeiströmenden Erntegutes resultieren Reibungskräfte, welche durch einen Kraftvektor F_R veranschaulicht werden. Der Verlauf des Kraftvektors F_R der resultierenden Reibungskräfte ist parallel zur Längsachse LA der Kraftmesszelle 72 beziehungsweise senkrecht zur Messrichtung der Kraftmesszelle 72, so dass die resultierenden Reibungskräfte nicht in die Kraftmessung zur Bestimmung des Durchsatzes eingehen. Hierdurch ist eine die Reibungskräfte kompensierende Anordnung der Sensorfläche 68 gegeben. Nachstehend wird ein Verfahren zur Bestimmung des aus gereinigtem Erntegut bestehenden Massenstroms beschrieben, der von der Fördervorrichtung 30 in de Korntank 32 gefördert wird. Wie bereits ausgeführt wurde, wird das von der Fördervorrichtung 30 abgegebene gereinigte Erntegut von der im Schüttgutabgabebereich 42 vorgesehenen Führungsfläche 66 des Führungsabschnittes 64 in Richtung der Sensorfläche 68 der Messeinrichtung 70 umgelenkt. Die Masse des Erntegutstromes wird durch die Messung der auf die Sensorfläche 68 der Messeinrichtung 70 ausgeübten resultierenden Zentrifugalkraft (Kraftvektor F_G) bestimmt, wobei zumindest zwei diese Kraftmessung beeinflussende Parameter kompensiert werden. Zum einen wird aufgrund der besonderen Anordnung der Kraftmesszelle 72 die resultierende Reibungskraft (Kraftvektor F_R), die der Erntegutstrom auf die Sensorfläche 68 aufbringt, kompensiert.

Darüber hinaus ist vorgesehen, dass zumindest ein zweiter die Kraftmessung beeinflussender Parameter kompensiert wird. Als die Kraftmessung beeinflussende Parameter können unter anderem auf die Fördervorrichtung 30 in im Wesentlichen vertikaler Richtung einwirkende äußere mechanische Kräfte, ein Drehzahlabfall respektive ein Abfall der Fördergeschwindigkeit der Fördervorrichtung 30 sowie erfindungsgemäß eine Neigung der Messeinrichtung 70 sein. Grundsätzlich finden auch die Erntegutart sowie Eigenschaften des Erntegutes, wie die Feuchte, Berücksichtigung. Je nach Erntegutart beeinflussen Gewicht und Größe der einzelnen Partikel des gereinigten Erntegutes das Strömungsverhalten sowie die auf die Sensorfläche 68 ausgeübte resultierende Zentrifugalkraft F_G. Die Feuchtigkeit des Erntegutes kann die Geschwindigkeit beeinflussen, mit der das Erntegut nach dem Abwurf von dem jeweiligen Förderelement 58 entlang des Führungsabschnittes 64 und der Sensorfläche 68 entlang strömt. Zudem kann durch die Feuchtigkeit das Haftreibungsverhalten des Erntegutes beeinflusst werden.

Um diese Einflüsse bei der Bestimmung des Massenstroms basierend auf der Kraftmessung durch die Messeinrichtung 70 zu berücksichtigen, ist die Steuer-und Regelvorrichtung 52 mit den Sensoren 44, 46, 48 signaltechnisch verbunden. Der jeweilige Sensor 44, 46, 48 stellt ein die jeweilige zu überwachende Messgröße repräsentierendes Signal bereit, welches von der Steuer- und Regelvorrichtung 52 empfangen und ausgewertet und hinsichtlich seines Einflusses auf die mittels der Kraftmesszelle 72 gemessen resultierenden Kraft F_K berücksichtigt wird.

Somit lässt sich mittels des Drehzahlsensors 46 eine temporär auftretende Drückung, das heißt ein Drehzahlabfall, des Antriebsmotors 34 erfassen. Der temporäre Drehzahlabfall des Antriebsmotors 34 hat einen Drehzahlabfall respektive eine Reduzierung der Fördergeschwindigkeit der Fördervorrichtung 30 zur Folge. Der damit einhergehende Geschwindigkeitsabfall des entlang der Sensorfläche 68 strömenden Erntegutstromes, der eine Reduzierung des Durchsatzes bedeutet, wird entsprechend von der Steuer- und Regelvorrichtung 52 verrechnet. Auf diese Weise wird die von dem Erntegutstrom auf die Sensorfläche 68 aufgebrachte resultierende Zentrifugalkraft F_G unter Berücksichtigung des Geschwindigkeitsabfalls bei der Kraftmessung durch die Messeinrichtung 70 zur Bestimmung des Durchsatzes bestimmt.

Ein weiterer Parameter, der die Bestimmung des Massenstroms aufgrund der Kräftemessung durch die Messeinrichtung 70 beeinflusst, ist die Feuchtigkeit des Erntegutes. Der Feuchtigkeitsgehalt des Erntegutes bei der Ernte variiert in Abhängigkeit von dem Erntezeitpunkt und den äußeren Umgebungsbedingungen, wie der Witterung. Mit zunehmendem Feuchtigkeitsgehalt kann das Gesamtgewicht eines Korns ansteigen. Wesentlicher ist der Einfluss auf die Geschwindigkeit, mit der das Erntegut nach dem Abwurf von dem jeweiligen Förderelement 58 strömt sowie die Beeinflussung des Reibungsverhaltens. Entsprechend können sich die von dem vorbeiströmenden Erntegut auf die Sensorfläche 68 ausgeübten resultierenden Kräfte, die resultierende Zentrifugalkraft F_G und die resultierende Reibungskraft, bei gleichbleibendem Durchsatz verändern. Um diesen Einfluss zu kompensieren, wird die Detektionscharakteristik der Messeinrichtung 70 in Abhängigkeit von der Feuchtigkeit des Erntegutes geändert. Zur Bestimmung der Feuchtigkeit des gereinigten Erntegutes kann, wie weiter oben beschrieben, ein Feuchtesensor 44 in dem Mähdrescher 10 angeordnet sein. Bevorzugt ist dieser Feuchtesensor 44 im Bereich des Schüttgutannahmebereichs 40 angeordnet. Alternativ kann zu Beginn des Erntevorganges eine manuelle Bestimmung des Feuchtigkeitsgehaltes des Ernteguts durchgeführt werden. Das Ergebnis dieser manuellen Feuchtigkeitsgehaltsbestimmung kann mittels der Ein- und Ausgabeeinrichtung 80 an die Steuer- und Regelungsvorrichtung 52 übergeben werden, um die Detektionscharakteristik der Messeinrichtung 70 entsprechend anzupassen.

Bei der Erntefahrt des Mähdreschers 10 kann es aufgrund der Beschaffenheit des zu bearbeitenden Bodens zu einer Längs- und/oder Querneigung des Mähdreschers 10 beziehungsweise der Fahrdynamik zu Beschleunigungsänderungen kommen. Die Kraftmesszelle 72 misst die auf die Sensorfläche 68 einwirkende resultierende Zentrifugalkraft F_G jedoch nur dann im vollen Betrag, wenn Sie exakt in Messrichtung der Kraftmesszelle 72 wirkt. Ändert sich die Neigung der Kraftmesszelle 72 respektive die des Mähdreschers 10, so wirkt die Gravitationskraft unter einem geänderten Winkel auf die Sensorfläche 68 und auf den Erntegutstrom ein. Die Änderung der resultierenden Zentrifugalkraft F_G und der von der Kraftmesszelle 72 gemessenen resultierenden Kraft F_K unter dem Einfluss der Neigung des Mähdreschers 10 wird entsprechend verrechnet und dadurch bei der Bestimmung des Durchsatzes bzw. des Ertrages durch die Kraftmessung kompensiert. Diese Kompensation kann intern in der Messeinrichtung 70 erfolgen. Alternativ ist ein Neigungssensor 50 an oder in dem Mähdrescher 10 angeordnet. Die von dem Neigungssensor 50 erfassten, eine Längs-und/oder Querneigung repräsentierenden Signale werden an die Steuer- und Regelungsvorrichtung 52 übertragen und von dieser ausgewertet. Die Steuer-und Regelungsvorrichtung 52 kompensiert mittels dieser Neigungswerte deren Einfluss auf die Durchsatzbestimmung.

Weiterhin beeinflussen auf die Fördervorrichtung 30 in im Wesentlichen vertikaler Richtung einwirkende äußere mechanische Kräfte die Bestimmung des Durchsatzes. Hierbei handelt es sich um Beschleunigungskräfte, welche durch die Fahrt auf dem Feld bzw. die Antriebe 34 des Mähdreschers 10 auftreten. Im letzteren Fall handelt es sich um durch den Antrieb und die Antriebselemente des Mähdreschers auf die Karosserie übertragene Schwingungen, die auch in die Fördervorrichtung 30 eingeleitet werden. Auch diese Kräfte wirken auf die Messeinrichtung 70 in der Weise ein, dass es zu Abweichungen der von der Kraftmesszelle 72 im Zeitpunkt des Auftretens der Beschleunigung gemessenen resultierenden Kräfte F_K kommt. So kann das Durchfahren einer Senke im Boden zu einer schlagartigen Beschleunigung in im Wesentlichen vertikaler Richtung führen, welche die Messung der von dem vorbeiströmenden Erntegut auf die Sensorfläche 68 ausgeübten resultierenden Zentrifugalkraft F_G beeinflusst. Diese durch die Beschleunigung verursachte zusätzliche Kraft wird ebenfalls kompensiert. Dabei kann auch diese Kompensation intern in der Messeinrichtung 70 erfolgen. Alternativ ist ein Beschleunigungssensor 48 an oder in dem Mähdrescher 10 angeordnet. Dessen Signale werden ebenfalls von der Steuer-und Regelungsvorrichtung 52 empfangen und ausgewertet, um den Einfluss der Beschleunigung auf die Kraftmessung kompensieren zu können.

Zwecks der Kompensation dieser Einflussgrößen sind in einer Speichereinheit der Steuer- und Regelungsvorrichtung 52 entsprechende Algorithmen bzw. Detektionscharakteristika, die sich an der Erntegutart oder dem Erntemaschinentyp orientieren können, abrufbar hinterlegt.

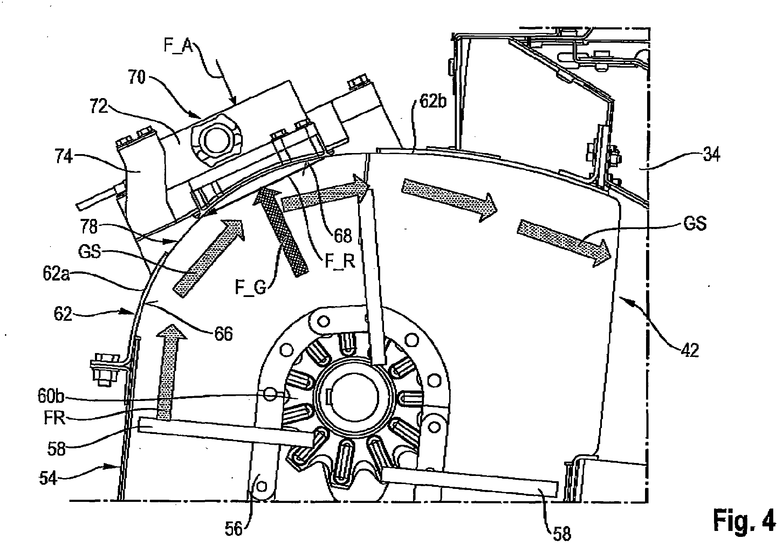

In Fig. 4 ist eine alternative Anordnung der Messeinrichtung 70 dargestellt. Gemäß dieser Ausführungsform befindet sich die Sensorfläche 68 im ersten Abschnitt 62a des Deckelabschnitts 62. Die Führungsfläche 66 ist dabei Teil des ersten Abschnitts 62 des Deckelabschnitts 62. Aufgrund dieser Anordnung im ersten Abschnitt 62a befindet sich die Messeinrichtung 70, das heißt die Kraftmesszelle 72 und die Sensorfläche 68, außerhalb des Korntanks 34. Gemäß dieser Ausführung befindet sich die Führungsfläche 66 im kopfseitigen Einlaufbereich der Fördervorrichtung 30, das heißt vor dem Umlenkpunkt der Förderelemente 58. Vorteilhaft an dieser Anordnung bzw. Positionierung der Sensorfläche 68 ist, dass das Erntegut eine starke Umlenkung aufgrund der stärkeren Krümmung der Sensorfläche 68 erfährt. Somit wirken große Kräfte auf die Sensorfläche 68 ein, so dass auch geringe Erntegutdurchsätze gut messbar sind. Des Weiteren wird wegen des geringen Abstands zwischen dem freien Ende 58a des Förderelementes 58 und der Sensorfläche 68 das Erntegut in diesem Bereich aktiv gefördert. Dies führt zu einem geringeren Reibungseinfluss bei der Messung des Massenstromes. Zudem gewährleistet die aktive Förderung des Erntegutes einen kontinuierlichen Erntegutfluss, der in geringerem Maße dem Einfluss der Gravitation unterliegt.

Diese Anordnung der Messeinrichtung 70 außerhalb des Korntanks 34 erfordert eine Maßnahme, um Erntegutverluste durch Austrag in einem Bereich zwischen dem Deckelabschnitt 62 und der Messeinrichtung 68 zu vermeiden.

Eine mögliche Maßnahme besteht darin, dass eine umlaufende Abdichtung der Sensorfläche 68 gegenüber dem ersten Abschnitt 62a vorgesehen ist, um Erntegutverluste zu vermeiden. Denkbar ist auch die Einhaltung eines so geringen Spaltmaßes zwischen der Sensorfläche 68 und dem ersten Abschnitt 62a, das ein Hindurchtreten von Erntegut verhindert wird. Als alternative Maßnahme kann vorgesehen sein, dass durch den Spalt zwischen der Sensorfläche 68 und dem ersten Abschnitt 62a hindurchtretendes Erntegut von einer Vorrichtung aufgefangen und in die Fördervorrichtung zurückgeführt wird.

Um trotz der umlaufenden Abdichtung die Durchsatzmessung, welche die Sensorfläche 68 mit dem ersten Abschnitt 62a des Deckelabschnittes 62 verbindet, zu gewährleisten, ist das zur Abdichtung verwendete Material elastisch ausgeführt. Das elastische Material der Abdichtung ermöglicht der Sensorfläche 68 eine geringfügige Auslenkung in die Messrichtung der Kraftmesszelle 72, die durch die resultierende Zentrifugalkraft F_G verursacht wird. Die Messung der von dem Erntegutstrom auf die Sensorfläche 68 übertragenen Zentrifugalkraft F_G wird durch die Auslenkung der Sensorfläche 68 in Messrichtung gegenüber dem ersten Abschnitt 62a erfasst. Hierbei ist zu berücksichtigen, dass das zur umlaufenden Abdichtung verwendete Material eine der resultierenden Zentrifugalkraft F_G entgegen gerichtete resultierende Rückstellkraft F_A aufbringt. Diese resultierende Rückstellkraft F_A wird in Kenntnis der materialspezifischen Charakteristika der Abdichtung sowie der geometrischen Gegebenheiten der Anordnung der Kraftmesszelle 72 entsprechend kompensiert. Ein weiterer Aspekt dieser Ausführungsform ist dabei die Herstellung des Deckelabschnittes 62 aus einem Kunststoff.

**Bezugszeichenliste**

| | | | |
|---|---|---|---|
| 10 | Mähdrescher | 68 | Sensorfläche |
| 12 | Erntegut | 70 | Messeinrichtung |
| 14 | Arbeitsaggregate | 72 | Kraftmesszelle |
| 16 | Schneidwerk | 74 | Halterung |
| 18 | Schrägförderer | 76 | Förderschnecke |
| 20 | Drescheinrichtung | 78 | Tangentialer Übergang |
| 22 | Umlenktrommel | 80 | Ein-und Ausgabeeinrichtung |
| 24 | Trenneinrichtung | | |
| 26 | Rücklaufboden | A | Mindestabstand |
| 28 | Reinigungsvorrichtung | B | Abstand |
| 30 | Fördervorrichtung | D | Teilkreisdurchmesser von 60b |
| 32 | Korntank | FR | Förderrichtung |
| 34 | Antriebsmaschine | GS | Strömungsverlauf |
| 40 | Schüttgutannahmebereich | | |
| 42 | Schüttgutabgabebereich | F_G | Kraftvektor Zentrifugalkraft |
| 44 | Feuchtesensor | F_R | Kraftvektor Reibungskraft |
| 46 | Drehzahlsensor | F_K | Kraftvektor Beschleunigung |
| 48 | Beschleunigungssensor | F_A | Kraftvektor Rückstellkraft |
| 50 | Neigungssensor | | |
| 52 | Steuer- und Regelvorrichtung | | |
| 54 | Gehäuse | | |
| 56 | Förderkette | | |
| 58 | Förderelemente | | |
| 58a | Freies Ende von 58 | | |
| 60a | Unteres Kettenrad | | |
| 60b | Oberes Kettenrad | | |
| 62 | Deckelabschnitt | | |
| 62a | Erster Abschnitt von 62 | | |
| 62b | Zweiter Abschnitt von 62 | | |
| 64 | Führungsabschnitt | | |
| 66 | Führungsfläche | | |

## Patentansprüche

1. Verfahren zur Bestimmung eines aus Schüttgut bestehenden Massenstroms, insbesondere Körnerfrüchten, welches mittels einer endlos umlaufenden, flächige Förderelemente (58) aufweisenden, Fördervorrichtung (30) von einem tiefer gelegenen Schüttgutannahmebereich (40) zu einem höher gelegenen Schüttgutabgabebereich (42) gefördert wird, in welchem das von der Fördervorrichtung (30) abgegebene Schüttgut durch eine im Schüttgutabgabebereich (42) angeordnete Führungsfläche (66) in Richtung auf eine Messeinrichtung (70) umgelenkt wird, wobei der Massenstrom durch die Messung einer auf eine Sensorfläche (68) der Messeinrichtung (70) ausgeübten resultierenden Kraft (F_G) bestimmt wird, **dadurch gekennzeichnet, dass** zumindest zwei die Kraftmessung beeinflussende und von Schüttguteigenschaften unabhängige Parameter kompensiert werden, wobei ein erster Parameter die vom Schüttgut auf die Sensorfläche (68) übertragenen Reibungskräfte sind, wobei die Reibungskräfte durch eine geeignete Anordnung der Messeinrichtung (70), in welcher eine resultierende Reibungskraft (F_R) senkrecht zur Messrichtung der Messeinrichtung (70) wirkt, kompensiert werden und ein zweiter Parameter äußere Einflüsse repräsentiert, die die Messung respektive die von dem die Sensorfläche überströmenden Schüttgut auf die Sensorfläche aufgebrachten Kräfte dauerhaft oder nur temporär beeinflussen, wobei der zweite Parameter eine Neigung der Messeinrichtung (70) ist, wobei die Neigung der Messeinrichtung (70) detektiert und kompensiert wird.

2. Verfahren nach Anspruch 1 , **dadurch gekennzeichnet, dass** auf die Fördervorrichtung (30) in im Wesentlichen vertikaler Richtung einwirkende äußere mechanische Kräfte kompensiert werden.

3. Verfahren nach einem der Ansprüche 1 und 2, **dadurch gekennzeichnet, dass** ein Drehzahlabfall der Fördervorrichtung (30) kompensiert wird.

4. Verfahren nach einem der Ansprüche 1 bis 3, **dadurch gekennzeichnet, dass** zur Kalibrierung der Messeinrichtung (70) mehrfach gegengewogen und aus dem Ergebnis ein Korrekturfaktor bestimmt wird.

5. Verfahren nach einem der Ansprüche 1 bis 4, **dadurch gekennzeichnet, dass** die Art und Beschaffenheit des Schüttgutes berücksichtigt wird.

6. Verfahren nach einem der Ansprüche 1 bis 5, **dadurch gekennzeichnet, dass** die Messcharakteristik der Messeinrichtung (70) in Abhängigkeit von der Materialart und dessen physikalischen Eigenschaften angepasst wird.

7. Verfahren nach einem der Ansprüche 1 bis 6, **dadurch gekennzeichnet, dass** die Bestimmung des Massenstroms dichteunabhängig durchgeführt wird.

8. Steuer- und Regelungsvorrichtung (52) zur Durchführung eines Verfahrens zur Bestimmung eines aus Schüttgut bestehenden Massenstroms nach einem der vorangehenden Ansprüche 1 bis 7, welcher von einer selbstfahrenden Erntemaschine (10), insbesondere Mähdrescher, mittels einer endlos umlaufenden, flächige Förderelemente (58) aufweisenden Fördervorrichtung (30) von einem tiefer gelegenen Schüttgutannahmebereich (40) zu einem höher gelegenen Schüttgutabgabebereich (42) gefördert wird, in welchem das von dem Fördervorrichtung (30) abgegebene Schüttgut durch eine im Schüttgutabgabebereich (42) angeordnete Führungsfläche (66) in Richtung auf eine Messeinrichtung (70) umlenkbar ist, wobei der Massenstrom durch die Messung einer auf eine Sensorfläche (68) der Messeinrichtung (70) ausgeübten resultierenden Kraft (F_G) bestimmt wird, **dadurch gekennzeichnet, dass** die Steuer- und Regelungsvorrichtung (52) dazu eingerichtet ist, zumindest zwei und von Schüttguteigenschaften unabhängige Parameter, welche die durch die Messeinrichtung (70) durchgeführte Kraftmessung beeinflussen, zu kompensieren, wobei ein erster Parameter die Reibungskräfte sind, wobei die vom Schüttgut auf die Sensorfläche (68) übertragenen Reibungskräfte durch eine geeignete Anordnung der Messeinrichtung (70), in welcher eine resultierende Reibungskraft (F_R) senkrecht zur Messrichtung der Messeinrichtung (70) wirkt, kompensiert werden und ein zweiter Parameter äußere Einflüsse repräsentiert, die die Messung respektive die von dem die Sensorfläche überströmenden Schüttgut auf die Sensorfläche aufgebrachten Kräfte dauerhaft oder nur temporär beeinflussen, wobei der zweite Parameter eine Neigung der Messeinrichtung (70) ist, wobei die Neigung der Messeinrichtung (70) detektiert und kompensiert wird.

9. Steuer- und Regelungsvorrichtung (52) nach Anspruch 8, **dadurch gekennzeichnet, dass** die Steuer- und Regelungsvorrichtung (52) mit zumindest einem Sensor (44, 46, 48, 50) signaltechnisch verbunden ist, der der Erfassung zumindest eines die Kraftmessung beeinflussenden Parameters dient.

10. Steuer- und Regelungsvorrichtung (52) nach einem der Ansprüche 8 oder 9, **dadurch gekennzeichnet, dass** der zumindest eine Sensor als ein Beschleunigungssensor (48) ausgebildet ist.

11. Steuer- und Regelungsvorrichtung (52) nach einem der Ansprüche 8 bis 10, **dadurch gekennzeichnet, dass** der zumindest eine Sensor als ein Neigungssensor (50) ausgebildet ist.

12. Steuer- und Regelungsvorrichtung (52) nach einem der Ansprüche 8 bis 11, **dadurch gekennzeichnet, dass** der zumindest eine Sensor als ein Drehzahlsensor (46) ausgebildet ist.

13. Steuer- und Regelungsvorrichtung (52) nach einem der Ansprüche 8 bis 12, **dadurch gekennzeichnet, dass** die Steuer- und Regelungsvorrichtung (52) eine Speichereinheit umfasst, in der verschiedene Detektionscharakteristika der Messeinrichtung (70) hinterlegt sind, die in Abhängigkeit von einem Erntegutparameter, insbesondere der Erntegutart und/oder der Erntegutfeuchte, auswählbar sind.

## Claims

1. A method for determining a mass flow consisting of bulk material, in particular cereals, which is conveyed by means of a continuously circulating conveyor device (30) having laminar conveyor elements (58) from a lower bulk material receiving area (40) to a higher bulk material delivery area (42), in which the bulk material delivered by the conveyor device (30) is deflected in the direction of a measuring device (70) by means of a guide surface (66) disposed in the bulk material delivery area (42), whereupon the mass flow is determined by measuring a resultant force (F_G) exerted on a sensor surface (68) of the measuring device (70), **characterized in that** at least two parameters which have an influence on the force measurement and which are independent of bulk material properties are compensated for, wherein a first parameter is the frictional forces transferred from the bulk material to the sensor surface (68), wherein the frictional forces are compensated for by a suitable disposition of the measuring device (70) in which a resultant frictional force (F_R) acts in a direction perpendicular to the measurement direction of the measuring device (70), and a second parameter represents external influences which have a permanent or only temporary influence on the measurements of the respective forces exerted on the sensor surface by the bulk material flowing over the sensor surface, wherein the second parameter is an inclination of the measuring device (70), wherein the inclination of the measuring device (70) is detected and compensated for.

2. The method according to claim 1, **characterized in that** external mechanical forces acting on the conveyor device (30) in a substantially vertical direction are compensated for.

3. The method according to claim 1 and claim 2, **characterized in that** a reduction in the rotational rate of the conveyor device (30) is compensated for.

4. The method according to one of claims 1 to 3, **characterized in that**, in order to calibrate the measuring device (70), weighing is carried out a plurality of times and a correction factor is determined from the result.

5. The method according to one of claims 1 to 4, **characterized in that** the type and nature of the bulk material are taken into consideration.

6. The method according to one of claims 1 to 5, **characterized in that** the measurement characteristics of the measuring device (70) are adjusted as a function of the type of bulk material and the physical properties thereof.

7. The method according to one of claims 1 to 6, **characterized in that** the determination of the mass flow is carried out independently of the density.

8. A control and regulating device (52) for carrying out a method for determining a mass flow consisting of bulk material as claimed in one of the preceding claims 1 to 7, which is conveyed by a self-propelled harvesting machine (10), in particular a combine harvester, by means of a continuously circulating conveyor device (30) having laminar conveyor elements (58), from a lower bulk material receiving area (40) to a higher bulk material delivery area (42), in which the bulk material delivered by the conveyor device (30) can be deflected towards a measuring device (70) by means of a guide surface (66) disposed in the bulk material delivery area (42), wherein the mass flow is determined by measuring a resultant force (F_G) exerted on a sensor surface (68) of the measuring device (70), **characterized in that** the control and regulating device (52) is configured to compensate for at least two parameters which are independent of bulk material properties which have an influence on the measurement of the force carried out by the measuring device (70), wherein a first parameter is the frictional forces, wherein the frictional forces transmitted from the bulk material onto the sensor (68) are compensated for by a suitable disposition of the measuring device (70) in which a resultant frictional force (F_R) acts in a direction perpendicular to the measurement direction of the measuring device (70), and a second parameter represents external influences which have a permanent or only temporary influence on the measurements of the respective forces exerted on the sensor surface by the bulk material flowing over the sensor surface, wherein the second parameter is an inclination of the measuring device (70), wherein the inclination of the measuring device (70) is detected and compensated for.

9. The control and regulating device (52) according to claim 8, **characterized in that** the control and regulating device (52) is connected with respect to signalling to at least one sensor (44, 46, 48, 50) which serves to acquire at least one of the parameters having an influence on the force measurement.

10. The control and regulating device (52) according to claim 8 or claim 9, **characterized in that** the at least one sensor is configured as an acceleration sensor (48).

11. The control and regulating device (52) according to one of claims 8 to 10, **characterized in that** the at least one sensor is configured as an inclination sensor (50).

12. The control and regulating device (52) according to one of claims 8 to 11, **characterized in that** the at least one sensor is configured as a rotational rate sensor (46).

13. The control and regulating device (52) according to one of claims 8 to 12, **characterized in that** the control and regulating device (52) comprises a storage unit in which various detection characteristics of the measuring device (70) are stored, which can be selected as a function of a crop parameter, in particular the type of crop and/or moisture content of the crop.

## Revendications

1. Procédé de détermination d'un flux massique constitué de produit en vrac, en particulier de grains, qui, au moyen d'un dispositif d'amenée à défilement continu (30) comportant des éléments d'amenée plats (58), est amené d'une zone de réception de produit en vrac (40) située plus bas à une zone de restitution de produit en vrac (42) située plus haut, dans laquelle le produit en vrac restitué par le dispositif d'amenée (30) est dévié par l'intermédiaire d'une surface de guidage (66) disposée dans la zone de restitution de produit en vrac (42) en direction d'un équipement de mesure (70), le flux massique étant déterminé par la mesure d'une force résultante (F_G) exercée sur une surface de capteur (68) de l'équipement de mesure (70), **caractérisé en ce qu'**au moins deux paramètres influant sur la mesure de force et indépendants de propriétés du produit en vrac sont compensés, un premier paramètre étant les forces de frottement transmises par le produit en vrac à la surface de capteur (68), les forces de frottement étant compensées par un agencement approprié de l'équipement de mesure (70), dans lequel une force résultante de frottement (F_R) agit perpendiculairement à la direction de mesure de l'équipement de mesure (70), et un second paramètre représentant des influences extérieures qui influent durablement ou seulement temporairement sur la mesure, respectivement sur les forces exercées sur la surface de capteur par le produit en vrac parcourant la surface de capteur, le second paramètre étant une inclinaison de l'équipement de mesure (70), l'inclinaison de l'équipement de mesure (70) étant détectée et compensée.

2. Procédé selon la revendication 1, **caractérisé en ce que** des forces mécaniques extérieures agissant sur le dispositif d'amenée (30) dans une direction sensiblement verticale sont compensées.

3. Procédé selon une des revendications 1 et 2, **caractérisé en ce qu'**une baisse de vitesse de rotation du dispositif d'amenée (30) est compensée.

4. Procédé selon une des revendications 1 à 3, **caractérisé en ce que** pour étalonner l'équipement de mesure (70), plusieurs contre-mesures sont effectuées et, à partir du résultat, un facteur de correction est déterminé.

5. Procédé selon une des revendications 1 à 4, **caractérisé en ce que** le type et la constitution du produit en vrac sont prises en compte.

6. Procédé selon une des revendications 1 à 5, **caractérisé en ce que** la caractéristique de mesure de l'équipement de mesure (70) est adaptée en fonction de la nature de la matière et de ses propriétés physiques.

7. Procédé selon une des revendications 1 à 6, **caractérisé en ce que** la détermination du flux massique est effectuée indépendamment de la densité.

8. Dispositif de commande et de régulation (52) pour réaliser le procédé de détermination d'un flux massique constitué de produit en vrac selon une des revendications précédentes 1 à 7, lequel est amené par une machine de récolte automotrice (10), en particulier une moissonneuse-batteuse, au moyen d'un dispositif d'amenée à défilement continu (30) comportant des éléments d'amenée plats (58), d'une zone de réception de produit en vrac (40) située plus bas à une zone de restitution de produit en vrac (42) située plus haut, dans laquelle le produit en vrac restitué par le dispositif d'amenée (30) est déviable par l'intermédiaire d'une surface de guidage (66) disposée dans la zone de restitution de produit en vrac (42) en direction d'un équipement de mesure (70), le flux massique étant déterminé par la mesure d'une force résultante (F_G) exercée sur une surface de capteur (68) de l'équipement de mesure (70), **caractérisé en ce que** le dispositif de commande et de régulation (52) est agencé de façon à compenser au moins deux paramètres indépendants de propriétés du produit en vrac, lesquels influent sur la mesure de force effectuée par l'équipement de mesure (70), un premier paramètre étant les forces de frottement, les forces de frottement transmises par le produit en vrac à la surface de capteur (68) étant compensées par un agencement approprié de l'équipement de mesure (70), dans lequel une force résultante de frottement (F_R) agit perpendiculairement à la direction de mesure de l'équipement de mesure (70), et un second paramètre représentant des influences extérieures qui influent durablement ou seulement temporairement sur la mesure, respectivement sur les forces exercées sur la surface de capteur, le second paramètre étant une inclinaison de l'équipement de mesure (70), l'inclinaison de l'équipement de mesure (70) étant détectée et compensée.

9. Dispositif de commande et de régulation (52) selon la revendication 8, **caractérisé en ce que** le dispositif de commande et de régulation (52) est en liaison signalétique avec au moins un capteur (44, 46, 48, 50) qui sert à détecter au moins un paramètre influant sur la mesure de force.

10. Dispositif de commande et de régulation (52) selon une des revendications 8 ou 9, **caractérisé en ce que** le au moins un capteur est conçu sous la forme d'un capteur d'accélération (48).

11. Dispositif de commande et de régulation (52) selon une des revendications 8 à 10, **caractérisé en ce que** le au moins un capteur est conçu sous la forme d'un capteur d'inclinaison (50).

12. Dispositif de commande et de régulation (52) selon une des revendications 8 à 11, **caractérisé en ce que** le au moins un capteur est conçu sous la forme d'un capteur de vitesse de rotation (46) .

13. Dispositif de commande et de régulation (52) selon une des revendications 8 à 12, **caractérisé en ce que** le dispositif de commande et de régulation (52) inclut une unité de mémoire dans laquelle sont enregistrées diverses caractéristiques de détection de l'équipement de mesure (70), lesquelles sont sélectionnables en fonction d'un paramètre de produit récolté, en particulier du type de récolte et/ou de l'humidité du produit récolté.
